# EUROPÄISCHE PATENTSCHRIFT

(11) **EP 2 791 539 B1**
(45) Veröffentlichungstag und Bekanntmachung des Hinweises auf die Patenterteilung: **29.03.2017**
(21) Anmeldenummer: 12784262.3
(22) Anmeldetag: 13.11.2012
(51) Int. Cl.: F16D 65/12

(54) **GEBAUTE WELLENBREMSSCHEIBE**
ASSEMBLED AXLE BRAKE DISC
DISQUE DE FREIN ASSEMBLÉ MONTÉ SUR ESSIEU

(30) Priorität: 12.12.2011 DE 202011052265 U
(43) Veröffentlichungstag der Anmeldung: 22.10.2014
(73) Patentinhaber: Faiveley Transport Witten GmbH, 58454 Witten (DE)
(72) Erfinder: Wurth, Sebastian, 51688 Wipperfürth (DE); Mehlan, Andreas, 59425 Unna (DE)
(74) Vertreter: RGTH
(86) Internationale Anmeldenummer: PCT/EP2012/072472
(87) Internationale Veröffentlichungsnummer: WO 2013/087322

(56) Entgegenhaltungen:
- EP-A1- 2 028 387
- DE-B- 1 132 950
- FR-A1- 2 745 349
- US-A- 1 879 744
- US-A1- 2008 135 359

## Beschreibung

Die vorliegende Erfindung betrifft eine gebaute Wellenbremsscheibe mit einer Nabe und zwei Reibringen, die parallel und beabstandet zueinander angeordnet sind.

Gebaute Wellenbremsscheiben finden insbesondere für Schienenfahrzeuge Anwendung, und durch die gebaute Form der Wellenbremsscheiben können diese aus mehreren Einzelkomponenten zusammengebaut werden.

Unter einer gebauten Wellenbremsscheibe ist vorliegend eine Wellenbremsscheibe zu verstehen, die aus mindestens zwei Bauteilen zusammengefügt wird. Insbesondere soll mit einer gebauten Wellenbremsscheibe eine Bremsscheibe bezeichnet werden, die zwei Reibringe aufweist, welche nicht einteilig und miteinander struktureinheitlich gebildet sind, beispielsweise wie bekannt in einem Urformverfahren, sondern die einzeln bereitgestellt und bevorzugt durch weitere Elemente zu einem Reibringpaar durch Fügetechniken zusammengebaut sind. Als weiteres Einzelteil kann dabei die Nabe im Zusammenbau mit dem Reibringpaar gefügt werden.

Bekannt sind beispielsweise Wellenbremsscheiben, die eine Nabe aufweisen, an die zwei Reibringe parallel und beabstandet zueinander angebracht werden. Zwischen den Reibringen können sich Verbindungselemente befinden, die dazu ausgeführt sind, axial wirkende Belaganpresskräfte aufzunehmen. Insbesondere bei schweren Schienenfahrzeugen können die Belaganpresskräfte, die vom Bremsgestänge über die Bremsbeläge auf das Reibringpaar aufgebracht werden, sehr hohe Werte erreichen. Daher ergibt sich das Erfordernis, Wellenbremsscheiben mit zwischen den Reibringen angeordneten Verbindungselementen entsprechend steif und mechanisch hoch belastbar auszuführen.

Darüber hinaus ist ein guter Wärmeabtransport gefordert, und es wird häufig vorgesehen, einen Luftstrom zwischen den Reibringen zu erzeugen, der beispielsweise die Wellenbremsscheibe axial nabenseitig anströmt und radial außenseitig abströmt. Durch diesen Luftdurchsatz kann durch Wärmekonvektion zwischen den Reibringen die Bremsscheibe gekühlt werden, und der Luftstrom wird durch die Rotation der Wellenbremsscheibe um ihre Rotationsachse erzeugt. Insbesondere bei gegossenen Wellenbremsscheiben sind Gussgeometrien zwischen den Reibringen bekannt, die die Geometrie eines Radiallüfters nachbilden, sodass sich der entsprechende Luftdurchsatz durch die Wellenbremsscheibe ergibt.

Insbesondere sind gebaute Wellenbremsscheiben als Keramikbremsscheiben bekannt, die Reibringe aus einem Keramikwerkstoff, allgemein jedoch aus einem Werkstoff aus der Gruppe der Kohlenstoffe, aufweist. Häufig ist die Nabe derartiger nicht metallischer Bremsscheiben aus einem Stahlwerkstoff hergestellt, und es sind aufwändige Verbindungsgeometrien erforderlich, um wärmebedingte Verspannungen zwischen dem Keramik- oder Kohlenstoffwerkstoff und der metallischen Nabe zur Aufnahme der Reibringe zu vermeiden.

### Stand der Technik

Aus der DE 195 07 922 C2 ist eine gebaute Wellenbremsscheibe bekannt, die zwei parallel und beabstandet zueinander an einer Nabe angeordnete Reibringe aufweist. Zwischen den Reibringen befindet sich ein Lüftereinsatz, der zur Verbesserung der Kühlung an der Innenseite der Reibringe dient. Um für den Bremsvorgang axial wirkende Belaganpresskräfte aufzunehmen, ist der gezeigte Lüftereinsatz jedoch ungeeignet, und Axialkräfte, die durch die Bremszange über die Bremsbeläge auf die Reibringe wirken, müssen über die Verbindung der Reibringe mit der Nabe aufgenommen werden. Daher ergibt sich eine mechanisch eher geringer belastbare Konstruktion einer Wellenbremsscheibe.

Aus der DE 195 43 799 A1 ist eine weitere gebaute Wellenbremsscheibe bekannt, und zwischen aus einem Werkstoff der Gruppe der Kohlenstoffe hergestellten Reibringen erstrecken sich Verbindungselemente, um die hohen axial wirkenden Belaganpresskräfte aufzunehmen. Ein derartiger Aufbau ist für gebaute Wellenbremsscheiben mit Reibringen bekannt, die aus Keramik oder einem Werkstoff aus der Gruppe der Kohlenstoffe hergestellt sind. Der gebauten Form der Wellenbremsscheibe bedient man sich insbesondere deshalb, da stoffschlüssige Verbindungen zwischen den Reibringen aus einem Werkstoff aus der Gruppe der Kohlenstoffe mit einer Nabe, die in der Regel aus einem Stahlwerkstoff hergestellt ist, nicht auf einfache Weise verwendbar sind. Folglich werden Schraubverbindungen oder sonstige kraft- oder formschlüssige Verbindungstechniken verwendet, wobei in der Montagefuge zwischen den Reibringen und der Nabe häufig noch Elemente angeordnet sind, die die unterschiedliche Wärmedehnung zwischen der Nabe aus einem Stahlwerkstoff und den Reibringen aus Keramik oder einem Werkstoff aus der Gruppe der Kohlenstoffe ausgleichen, beispielsweise gebildet durch Nutensteine.

Insbesondere wenn eine steife, hoch belastbare, massive Verbindung zwischen den Reibringen verwendet wird, ergibt sich der Nachteil eines hohen Raumfüllungsgrades zwischen den Reibringen, durch den wiederum die Ventilation der Wellenbremsscheibe behindert wird.

### Darstellung der Erfindung: Aufgabe, Lösung, Vorteile

Es ist daher die Aufgabe der vorliegenden Erfindung, eine gebaute Wellenbremsscheibe mit Reibringen bereitzustellen, die hohen mechanischen Belastungen standhalten kann und die eine gute Innenbelüftung ermöglicht.

Diese Aufgabe wird ausgehend von einer gebauten Wellenbremsscheibe mit einer Nabe und Reibringen gemäß dem Stand der Technik mit den kennzeichnenden Merkmalen des Anspruches 1 und den kennzeichnenden Merkmalen des Anspruches 11 gelöst. Vorteilhafte Weiterbildungen der Erfindung sind in den abhängigen Ansprüchen angegeben.

Die Erfindung schließt die technische Lehre ein, dass zwischen den Reibringen ein Einlageelement mit sich sternförmig radial nach außen erstreckenden Armen angeordnet ist.

Durch die erfindungsgemäße Anordnung eines Einlageelementes, das sternförmig radial nach außen weisende Arme aufweist, wird eine Wellenbremsscheibe mit einer hohen mechanischen Belastbarkeit bereitgestellt, da das Einlageelement aus einem massiven, vorzugsweise aus einem Stahlwerkstoff hergestellten Körper gebildet werden kann. Wirken bei Betätigung der Wellenbremsscheibe Belaganpresskräfte auf die Reibringe, so können diese Kräfte durch die massive Bauweise der Reibringe im Paket mit dem Einlageelement ohne wesentliche elastische Verformungen aufgenommen werden. Auf der anderen Seite ist das Einlageelement jedoch trotz der hohen axialen Steifigkeit der Wellenbremsscheibe für eine gute Innenbelüftung der Wellenbremsscheibe ausgelegt, da die mitrotierenden Arme des Einlageelementes eine gute Ventilation der Wellenbremsscheibe bewirken.

Weiterhin können Stützbolzen vorgesehen sein, die zusätzlich zum Einlageelement zwischen den Reibringen angeordnet werden. Die Stützbolzen müssen dabei keine Verbindung zum Einlageelement, insbesondere zu den Armen des Einlageelementes aufweisen. Beispielsweise können die Stützbolzen zwischen den Armen des Einlageelementes angeordnet werden, bevorzugt um damit zusätzlich zu einer durch die Arme erzeugten radialen Luftströmung eine tangentiale Luftströmung zwischen den Reibringen zu erzeugen. Dabei können die Stützbolzen beispielsweise eine zylinderförmige Gestalt aufweisen und neben der Stützfunktion zur weiteren Aufnahme von Belaganpresskräften auf die Reibringe eine Kühlfunktion übernehmen.

Die Reibringe können vorzugsweise ebenfalls aus einem Stahlwerkstoff ausgebildet sein, wobei jedoch die Reibringe auch ein Material aus der Gruppe der Kohlenstoffe Verwendung finden können. Mit besonderem Vorteil können die Reibringe aus einem warmfesten Stahlwerkstoff ausgebildet sein, wohingegen für das Einlageelement ein kostengünstiger Vergütungsstahl auswählbar ist.

Um eine einfache, kostenminimale und schnelle Herstellung der gebauten Wellenbremsscheibe zu schaffen, ist nach einem weiteren Vorteil der Erfindung vorgesehen, dass die Reibringe mit dem Einlageelement verlötet sind. Das Lot kann in Form einer Paste oder einer Folie in die Fugen zwischen dem Einlageelement und den Reibringen angeordnet werden. Das Löten kann als Hartlöten und besonders bevorzugt als Hochtemperaturlöten vorgenommen werden, wobei insbesondere das Hochtemperaturlöten im Vakuum oder unter einer Schutzgasatmosphäre ausgeführt werden kann. Findet das Hochtemperaturlöten in einer Schutzgasatmosphäre statt, kann als Schutzgas insbesondere Stickstoff Verwendung finden. Insbesondere kann auch die Verbindung zwischen den Stützbolzen und den Innenseiten der Reibringe eine Lötverbindung aufweisen, und die Bolzen können auf der Innenoberfläche der Reibringe stumpf aufgesetzt werden, ohne dass die Stützbolzen in Löcher in den Reibringen aufgenommen werden müssen.

Alternativ zur Verbindungstechnik des Lötens können die Verbindungen zwischen dem Einlageelement bzw. den Stützbolzen und den Reibringen auch Schraubverbindungen, Nietverbindungen oder beispielsweise Schweißverbindungen aufweisen.

Mit dem Verbund aus dem Einlageelement und den Reibringen entsteht ein Reibringpaar, das ohne die Nabe einzeln handhabbar ist. Insbesondere wird durch das als einzelnes Austauschteil bereitstehende Reibringpaar der Vorteil geschaffen, dass bei einer Nabe, die beispielsweise in einem Schienenfahrzeug auf einer Achse montiert sein kann, ein altes Reibringpaar gegen ein neues Reibringpaar ausgetauscht werden kann.

Mit weiterem Vorteil kann zur Verbindung zwischen dem Reibringpaar und der Nabe vorgesehen sein, dass die Verbindung zwischen dem Einlageelement und der Nabe erzeugt wird. Die Verbindung zwischen dem Einlageelement und der Nabe kann beispielsweise durch mehrere Schraubverbindungen erzeugt werden, wobei das Einlageelement eine innenseitige Öffnung aufweist, in der die Nabe angeordnet und mit dem Einlageelement verbunden wird.

Zur Bildung der Schraubverbindungen kann das Einlageelement mehrere Löcher aufweisen, und an der Nabe können mehrere radial nach außen weisende Vorsprünge vorgesehen sein, die ebenfalls mit Löchern ausgeführt sind. Um die Schraubverbindungen herzustellen, können Schraubelemente verwendet werden, die sowohl durch die Löcher im Einlageelement als auch durch die Löcher in den Vorsprüngen an der Nabe hindurchgeführt werden. Beispielsweise können auf dem Umfang zwischen der Nabe und der Öffnung im Einlageelement verteilt neun Schraubverbindungen gleich beabstandet zueinander angeordnet sein.

Gemäß einem weiteren Vorteil können eine, bevorzugt mehrere und besonders bevorzugt drei Schraubverbindungen mit einem Kulissenstein ausgeführt sein, um das Einlageelement mit den Reibringen an der Nabe zu positionieren. Die Kulissensteine können mit einem Körperteil in einer in den Vorsprung der Nabe eingefrästen Tasche einsitzen, mit einem weiteren Körperteil kann der Kulissenstein in ein Zentrierloch eingesetzt sein, das am Einlageelement angeordnet ist. Alternativ besteht vorteilhaft die Möglichkeit, die Nutensteine in Taschen einzusetzen, die innseitig am Einlageelement angeordnet sind.

Weiterhin ist es vorteilhaft, wenn die Schraubverbindungen Schraubenmuttern umfassen, die mit den Schraubelementen verschraubt werden, wenn diese durch die Löcher im Einlageelement und in den Vorsprüngen der Nabe hindurchgeführt sind. Auch ist es vorteilhaft, wenn ein Haltering verwendet wird, gegen den die Schraubenmuttern verspannt sind. Der Haltering kann eine Ringform besitzen, und in den Ring ist eine Anzahl von Löchern eingebracht, durch die die Schraubelemente hindurchgeführt werden. Anschließend können die Schraubenmuttern auf die Enden der Schraubelemente aufgeschraubt und gegen den Haltering verspannt werden, insbesondere unter Verwendung von Spannscheiben.

Das Einlageelement kann eine plane Erstreckung aufweisen, und beispielsweise kann das Einlageelement die etwa doppelte Dicke eines Reibelementes besitzen. Mittig im Einlageelement kann eine Öffnung eingebracht werden, die kreisrund ausgeführt ist und die sich zentrisch um die Rotationsachse der Wellenbremsscheibe herum erstreckt. Im Wesentlichen kann das Einlageelement aus einem Grundabschnitt ausgebildet sein, und vom Grundabschnitt erstrecken sich die Arme in radial nach außen weisender Richtung. Dadurch bildet das Einlageelement einen Stern, und die Arme bilden die wesentlichen Stützkörper zwischen den Reibringen, um die in axialer Richtung auf die Wellenbremsscheibe wirkenden Belaganpresskräfte aufzunehmen. Die Reibringe weisen ebenfalls eine nabenseitige Öffnung auf, in die die Nabe eingesetzt wird. Der Grundabschnitt des Einlageelementes kann dabei einen maximalen Durchmesser aufweisen, der kleiner ist als die mittige Öffnung in den Reibringen. Somit erstrecken sich lediglich die Arme des Einlageelementes zwischen die Reibringe.

Beispielsweise kann das Einlageelement 6 bis 30, vorzugsweise 12 bis 24 und besonders bevorzugt 18 Arme umfassen, wobei Arme mit einer breiten Form und Arme mit einer schmalen Form vorgesehen sein können, die insbesondere wechselweise in breiter und schmaler Form am Grundabschnitt des Einlageelementes angeordnet sind. Somit ist ein Arm einer breiten Form beidseitig mit Armen einer schmalen Form benachbart, und Arme mit der schmalen Form sind beidseitig mit Armen der breiten Form benachbart. Somit können neun Arme der schmalen Form und neun Arme der breiten Form am Grundabschnitt des Einlageelementes angeordnet sein.

Insbesondere zur Verbesserung der Ventilation für die Innenbelüftung der Wellenbremsscheibe ist es von Vorteil, dass ein Teil der mehreren Arme, insbesondere ein Teil der Arme der schmalen Form, vom Grundabschnitt getrennt sind. Somit bilden nur die Arme der breiten Form eine Verbindung zwischen dem Reibringpaar mit dem Einlageelement und der Nabe. Die Trennung der Arme vom Grundabschnitt erfolgt durch eine Entnahme von Material des Grundabschnittes, sodass beispielsweise die Stege, die sich zwischen den Armen und der zentralen Öffnung im Grundabschnitt des Einlageelementes erstrecken, entfernt werden. Die Entfernung der Stege kann beispielsweise durch eine Fräsbearbeitung, jedoch auch durch ein Laserstrahlschneiden oder durch ein Wasserstrahlschneiden erfolgen. Im Ergebnis können sich die Arme der schmalen Form von der Außenseite der Reibringe bis zur Innenseite der Reibringe erstrecken, und die Arme der breiten Form können sich von der Außenseite der Reibringe bis zur Befestigung an den Vorsprüngen der Nabe erstrecken.

Das Einlageelement kann aus zwei plan aneinander grenzende, insbesondere miteinander verlötete Teilelemente gebildet werden, sodass die Teilelemente ein Ausgangsmaterial aufweisen können, das nur die halbe Dicke des Einlageelementes besitzt und die Teilelemente können ebenfalls durch einen Hartlötvorgang oder durch ein Hochtemperaturlöten miteinander verbunden sein.

Die Aufgabe der vorliegenden Erfindung wird ferner gelöst durch ein Verfahren zur Herstellung einer Wellenbremsscheibe mit einer Nabe und zwei Reibringen, die parallel und beabstandet zueinander angeordnet sind. Das Verfahren sieht dabei wenigstens die Schritte des Bereitstellens eines plan ausgebildeten Einlageelementes mit sich sternförmig radial nach außen erstreckenden Armen und des Fügens der Reibringe an den Planseiten des Einlageelementes vor, sodass das Einlageelement zwischen den Reibringen angeordnet ist, und ferner ist der Schritt des Fügens des Einlageelementes an der Nabe vorgesehen.

Das Fügen der Reibringe am Einlageelement kann durch einen Lötvorgang durchgeführt werden, bevorzugt durch ein Hartlöten und besonders bevorzugt durch ein Hochtemperaturlöten im Vakuum oder unter Schutzgasatmosphäre. Insbesondere können das Einlageelement und/oder die Reibringe wärmebehandelt werden, wobei die Wärmebehandlung insbesondere mit dem Verfahrensschritt des Hartlötens oder des Hochtemperaturlötens im Vakuum oder unter Schutzgasatmosphäre kombiniert vorgenommen werden kann.

Zunächst können die Reibringe und/oder das Einlageelement durch ein thermisches oder durch ein abrasives Trennverfahren, insbesondere durch ein Laserstrahlschneiden oder durch ein Wasserstrahlschneiden, aus Blechbahnen ausgeschnitten werden. Dabei kann das Einlageelement aus zwei Teilelementen bereitgestellt werden, die zueinander gleich ausgebildet sind und die planparallel aufeinander angeordnet werden. Dabei können die Teilelemente ebenfalls durch einen Lötvorgang miteinander verbunden werden. Alternativ kann die Herstellung aus Rundmaterial Ø 640 auf entsprechende Dicke gesägt erfolgen.

Beim Herstellen der Reibringe und des Einlageelementes können in den Reibringen und im Einlageelement durch das Laserstrahlschneiden oder durch das Wasserstrahlschneiden Löcher vorgesehen werden, und wenn die Reibringe und das Einlageelement in ihrer Paketanordnung aufeinandergebracht sind, können durch die Löcher Spannstifte hindurchgeführt werden. Dadurch wird eine Zentrierung der Reibringe am Einlageelement erreicht, und nachdem Lot in den Fugen zwischen den Teilelementen des Einlageelementes und zwischen den Reibringen und dem Einlageelement angeordnet wurde, kann das Paket aus dem Einlageelement und den Reibringen in einen Vakuumofen gegeben werden. Dieser kann die Reibringe und das Einlageelement auf eine Löttemperatur von beispielsweise 1050°C bis 1070°C erwärmen, und die Temperatur wird solange gehalten, bis das Lot schmilzt und in den jeweiligen Trennfugen eine Verbindung bildet. Anschließend kann das Paket aus dem Einlageelement und den Reibringen, durch das nunmehr ein einzeln handhabbares Reibringpaar gebildet ist, im Vakuumofen beispielsweise durch Verwendung von Stickstoff abgeschreckt und angelassen werden. Dadurch wird der Lötprozess durch den gewünschten Prozess der Wärmebehandlung begleitet. Dabei kann der gesamte Prozess im Vakuumofen stattfinden. Alternativ kann auch nur der Lötprozess im Vakuumofen stattfinden, wobei anschließend jedoch zur Wärmebehandlung das Reibringpaar in einem gesonderten Ofen überführt wird, und als Abschreckmedium kann beispielsweise Öl verwendet werden, um eine höhere Abkühlgeschwindigkeit zu erreichen, wobei auch der Einsatz von Wasser, Polymer oder sonstigen Medien möglich ist. Dadurch kann in den Reibringen, jedoch auch im Einlageelement, eine bestimmte Gefügestruktur erreicht werden, die der Wellenbremsscheibe besonders vorteilhafte Materialeigenschaften verleiht. Nach dem Löten beziehungsweise nach der Wärmebehandlung kann das Reibringpaar durch eine spanende Bearbeitung der Außenflächen der Reibringe auf eine definierte Dicke gebracht werden. Die Spannstifte können eine Länge aufweisen, die kleiner ist als die Dicke des Reibringpaares. Alternativ können überstehende Abschnitte der Spannstifte durch die spanende Bearbeitung des Reibringpaares abgeplant werden oder die Spannstifte werden nach dem Lötprozess aus dem Reibringpaar wieder entnommen.

Das Einlageelement kann einen Grundabschnitt aufweisen, an dem die Arme angeordnet sind, die sich radial nach außen erstrecken, und als weiteren, insbesondere letzten Verfahrensschritt zur Bearbeitung des Reibringpaares kann vorgesehen sein, dass ein Teil der Anzahl der Arme vom Grundabschnitt getrennt wird, insbesondere durch eine spanabnehmende Bearbeitung des Grundabschnittes. Insbesondere können die Arme der schmalen Form vom Grundabschnitt gelöst werden, indem der Wurzelbereich der schmalen Arme im Übergang in den Grundabschnitt durch eine Fräsbearbeitung ausgefräst wird, sodass sich die Arme der schmalen Form lediglich von der Außenseite der Reibringe zur Innenseite der Reibringe radial erstrecken. Hingegen erstrecken sich die Arme der breiten Form von der Außenseite der Reibringe bis zur Überdeckung mit den Vorsprüngen in der Nabe radial nach innen, um die Schraubverbindungen zwischen der Nabe und den Armen herzustellen. Durch diese Maßnahme wird insbesondere die Innenbelüftung der Wellenbremsscheibe verbessert, da der Grundkörper des Einlageelementes einen Luftdurchsatz nicht behindert.

### Kurze Beschreibung der Zeichnungen

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigt:
Figur 1 ein Ausführungsbeispiel einer Wellenbremsscheibe in einer perspektivischen Ansicht mit den Merkmalen der vorliegenden Erfindung,
Figur 2 einen Querschnitt durch eine Wellenbremsscheibe mit einem Einlageelement und an diesem angeordneten Reibringen,
Figur 3 eine perspektivische Ansicht eines weiteren Ausführungsbeispiels eines Einlageelementes,
Figur 4 eine Querschnittsansicht durch das Einlageelement und die Reibringe, wobei ein Spannstift zur Positionierung der Reibringe am Einlageelement gezeigt ist,
Figur 5 eine Draufsicht auf die Wellenbremsscheibe mit den Reibringen und dem Einlageelement vor einer Fräsbearbeitung des Einlageelementes und
Figur 6 eine Draufsicht auf die Wellenbremsscheibe, nachdem eine Fräsbearbeitung am Einlageelement vorgenommen wurde und wobei die Nabe mit dem Einlageelement verbunden ist.

Gleiche Bezugszeichen verschiedener Ausführungsbeispiele bezeichnen gleiche Funktionsbauteile mit leicht unterschiedlichen Merkmalen.

### Bevorzugte Ausführungsformen der Erfindung

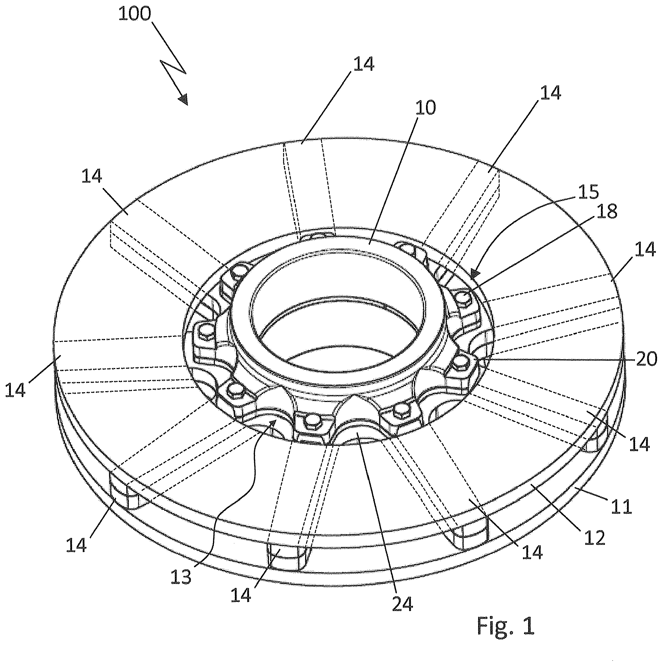

Figur 1 zeigt in einer perspektivischen Ansicht ein Ausführungsbeispiel einer erfindungsgemäßen Wellenbremsscheibe 100, und die Wellenbremsscheibe 100 ist aus mehreren Einzelteilen zusammengesetzt, sodass die Wellenbremsscheibe 100 als gebaute Wellenbremsscheibe 100 ausgeführt ist.

Die Wellenbremsscheibe 100 weist eine Nabe 10 auf, und in der Nabe 10 ist ein zentraler Durchgang eingebracht, durch den sich eine Welle hindurch erstrecken kann, auf der die Wellenbremsscheibe 100 angeordnet wird. Weiterhin weist die Wellenbremsscheibe 100 Reibringe 11 und 12 auf, die parallel und beabstandet zueinander angeordnet sind, und die die Reibflächen zur Anlage von Bremsbelägen bilden.

Erfindungsgemäß ist zwischen den Reibringen 11 und 12 ein Einlageelement 13 eingesetzt, das sich sternförmig radial nach außen erstreckende Arme 14 aufweist. Die Arme 14 sind über dem Umfang der Wellenbremsscheibe 100 gleich beabstandet angeordnet, wobei das Ausführungsbeispiel neun Arme 14 aufweist. Die Arme 14 sind mit einer Länge ausgeführt, sodass diese mit dem Außenumfang der Reibringe 11 und 12 bündig abschließen.

An der Nabe 10 sind Vorsprünge 20 angeordnet, die sich über einen Grundabschnitt 24 des Einlageelementes 13 erstrecken und mit diesem in Überdeckung gebracht sind. Zwischen dem Grundabschnitt 24 des Einlageelementes 13 und den Vorsprüngen 20 der Nabe 10 sind Schraubverbindungen 15 vorgesehen, die im Wesentlichen durch Schraubelemente 18 gebildet sind. Somit sind die Reibringe 11 und 12 über das Einlageelement 13 mit der Nabe 10 verbunden, und die Reibringe 11 und 12 bilden gemeinsam mit dem Einlageelement 13 ein Reibringpaar, das als einzeln handhabbare Baugruppe an der Nabe 10 angeordnet werden kann. Ist beispielsweise im Rahmen einer Wartung ein Austausch eines verschlissenen Reibringpaares der Wellenbremsscheibe 100 notwendig, so muss lediglich das Reibringpaar von der Nabe 10 gelöst und gegen ein neues Reibringpaar ausgetauscht werden.

Durch die sternförmige Ausbildung des Einlageelementes 13 mit dem Grundabschnitt 24 und den sich vom Grundabschnitt 24 radial nach außen erstreckenden Armen 14 entsteht ein Luftstrom durch die Wellenbremsscheibe 100, der die Wellenbremsscheibe 100 von innen nach außen durchströmt, und die Strömung findet zwischen den Armen 14 statt.

Auf nicht näher gezeigte Weise können zwischen den Reibringen 11 und 12 Kühlelemente vorgesehen werden, die beispielsweise auf zumindest einer der Innenseiten der Reibringe 11 und 12 angeordnet werden. Die Kühlelemente können beispielsweise durch ein Bolzenschweißen, jedoch auch durch eine Verschraubung oder durch ein Verlöten an der Innenseite der Reibringe 11 und 12 angeordnet werden. Dadurch kann die Ventilation der Wellenbremsscheibe 100 weiter verbessert werden.

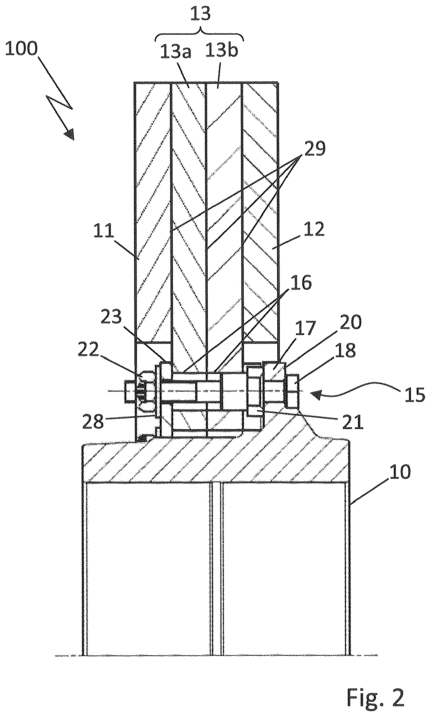

Figur 2 zeigt eine Schnittansicht durch die Wellenbremsscheibe 100, die lediglich halbseitig dargestellt ist. Dabei ist die Nabe 10 mit einem Vorsprung 20 im Schnitt dargestellt, und am Vorsprung 20 ist das Einlageelement 13 durch eine Schraubverbindung 15 angeordnet. Die Schraubverbindung 15 zeigt das Schraubelement 18, das sich durch ein Loch 16 im Einlageelement 13 und durch ein Loch 17 im Vorsprung 20 hindurch erstreckt. Angrenzend an den Vorsprung 20 ist ein Kulissenstein 21 angeordnet, der passgenau in einer in den Vorsprung 20 eingefrästen Tasche einsitzt. Ein weiterer Abschnitt des Kulissensteins 21 erstreckt sich passgenau in das Loch 16 im Einlageelement 13, sodass das Einlageelement 13 über den Kulissenstein 21 an der Nabe 10 zentriert wird.

Weiterhin umfasst die Schraubverbindung 15 eine Schraubenmutter 22, die auf das freie Ende des Schraubenschaftes des Schraubelementes 18 aufgeschraubt ist. Unter der Schraubenmutter 22 ist eine Unterlegscheibe 28 sowie ein um die Nabe 10 umlaufender Haltering 23 angeordnet, und im Haltering 23 ist eine Anzahl an Löchern vorgesehen, um die korrespondierende Anzahl an Schraubelementen 18 durch den Haltering 23 hindurchzuführen.

Am Einlageelement 13 sind außenseitig Reibringe 11 und 12 angeordnet, und das Einlageelement 13 ist aus einem ersten Teilelement 13a und einem zweiten Teilelement 13b gebildet, und die Teilelemente 13a und 13b sind planparallel aufeinandergebracht. Die Fugen 29 zwischen den Reibringen 11 und 12 sowie zwischen den Teilelementen 13a und 13b des Einlageelementes 13 sind als Lötfugen ausgebildet, und die Reibringe 11 und 12 sind mit dem Einlageelement 13, insbesondere auch gemeinsam mit den Teilelementen 13a und 13b, in einem Vakuumofen durch einen Hochtemperaturlötprozess miteinander verlötet. Das Einlageelement 13 kann auch einteilig ausgeführt sein, sodass sich die Fugen 29 auf die Verbindungen zwischen den Reibringen 11 und 12 und dem Einlageelement 13 beschränken.

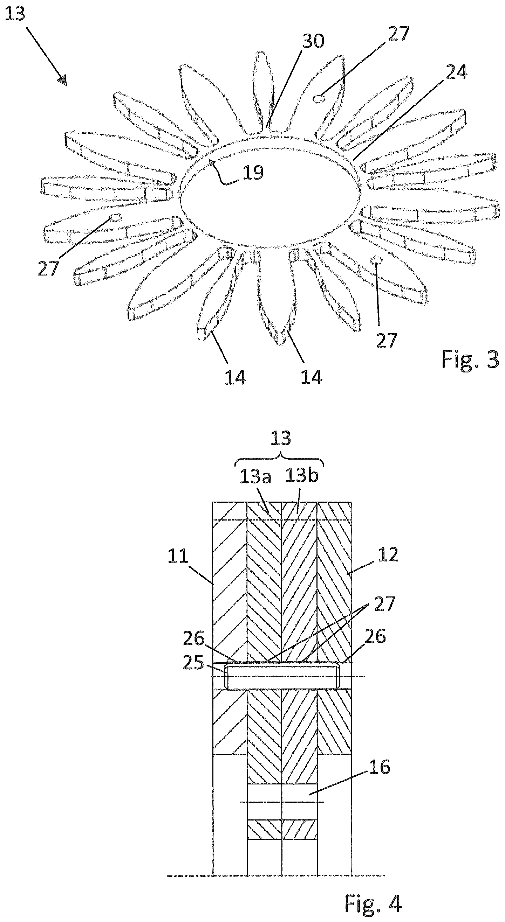

Figur 3 zeigt perspektivisch ein Einlageelement 13 mit einem Grundabschnitt 24, von dem sich insgesamt 18 Arme 14 radial nach außen erstrecken. In den Grundabschnitt 24 ist eine Öffnung 19 eingebracht, in der die Nabe 10 angeordnet werden kann.

Die Arme 14 sind gebildet durch Arme 14 einer breiten Form und Arme 14 einer schmalen Form, die wechselweise in breiter und schmaler Form benachbart am Grundabschnitt 24 des Einlageelementes 13 angeordnet sind. Das Ausführungsbeispiel des Einlageelementes 13 zeigt die Arme 14 mit in lateraler Richtung gekrümmten Formen, sodass die Arme 14 eine bauchige Kontur besitzen, und die Arme 14 der schmalen Form weisen in ihrer Armwurzel 30 im Übergang zum Grundabschnitt 24 eine starke Verjüngung auf. Hingegen besitzen die Arme 14 der breiten Form einen entsprechend großen Übergangsquerschnitt zum Grundabschnitt 24 ohne eine Verjüngung.

Weiterhin sind in beispielhaft drei Armen 14 Löcher 27 eingebracht, über die die Reibringe 11 und 12 am Einlageelement 13 positioniert werden können, wie in der folgenden Figur 4 näher gezeigt.

Figur 4 zeigt einen Querschnitt durch das Reibringpaar mit den Reibringen 11 und 12 und dem Einlageelement 13, das beispielhaft aus den beiden Teilelementen 13a und 13b ausgebildet ist. Im Einlageelement 13 ist das Loch 16 zum Hindurchführen des Schraubelementes 18 gezeigt, um das Reibringpaar über das Einlageelement 13 mit der Nabe 10 zu verbinden, wie in Figur 2 bereits beschrieben.

Um die Reibringe 11 und 12 am Einlageelement 13 zu zentrieren, ist in den Reibringen 11 und 12 jeweils ein Loch 26 eingebracht, und die Löcher 26 fluchten mit dem Loch 27 im Einlageelement 13. In die Löcher 26 und 27 ist ein Spannstift 25 eingesetzt, wodurch die Reibringe 11 und 12 am Einlageelement 13 positioniert werden. Insgesamt können in drei Armen 14 Löcher 27 eingebracht sein, und korrespondierend zu den Löchern 27 in den Armen 14 sind in jedem Reibring 11 und 12 ebenfalls drei Löcher 26 eingebracht. Dabei können bei der Herstellung der Reibringe 11 und 12, jedoch auch bei der Herstellung des Einlageelementes 13, die Löcher 26 und 27 bereits durch den thermischen und/oder abrasiven Trennprozess hergestellt werden. Die Maßgenauigkeit der Löcher 26 und 27 kann beispielsweise durch ein Laserstrahlschneiden oder durch ein Wasserstrahlschneiden bereits hinreichend sein, um eine geforderte Zentrierung der Reibringe 11 und 12 am Einlageelement 13 sicherzustellen.

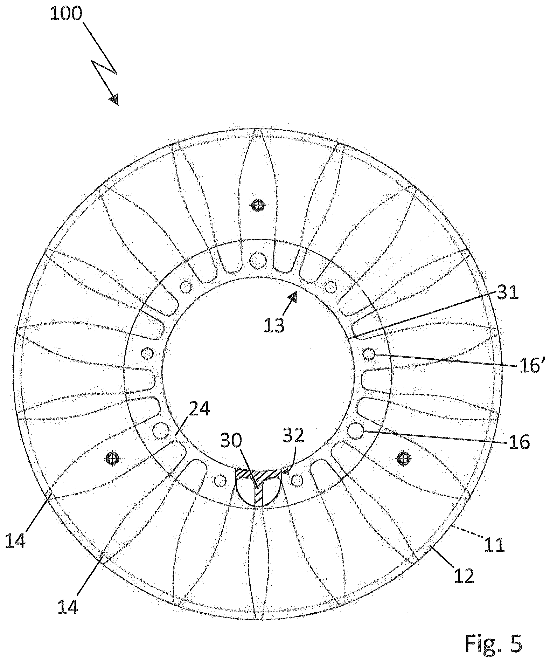

In Figur 5 ist die Wellenbremsscheibe 100 in einer Draufsicht gezeigt, und am Einlageelement 13 sind die Reibringe 11 und 12 in angeordneter Weise dargestellt. Die Reibringe 11 und 12 sind bereits mit dem Einlageelement 13 verlötet, und der Grundabschnitt 24 des Einlageelementes 13 ragt innenseitig aus der jeweils zentralen Öffnung 31 der Reibringe 11 und 12 hervor. Das Einlageelement 13 weist Arme 14 in einer breiten und in einer schmalen Form auf, und bei einem Arm 14 der schmalen Form ist ein Materialabschnitt 32 im Grundabschnitt 24 des Einlageelementes 13 gezeigt, der die Armwurzel 30 des Armes 14 umfasst.

Das Verfahren zur Herstellung der Wellenbremsscheibe 100 umfasst nach dem gezeigten Ausführungsbeispiel einen Verfahrenschritt, in dem der Materialabschnitt 32 aus dem Grundabschnitt 24 des Einlageelementes 13 an jedem Arm 14 der schmalen Form durch eine spanende Bearbeitung entnommen wird. Beispielsweise kann der Materialabschnitt 32 aus dem Grundabschnitt 24 herausgefräst werden, sodass der Arm 14 der schmalen Form zwischen den Reibringen 11 und 12 verbleibt. Die Verbindung zur Nabe 10 erfolgt folglich über die radial nach innen weisenden Enden der Arme 14 mit der breiten Form, in denen die Löcher 16 eingebracht sind. Dabei sind Löcher 16' als Durchgangslöcher ausgebildet, und die Löcher 16, die einen größeren Durchmesser aufweisen, dienen zur Aufnahme eines Abschnittes des Kulissensteins 21, wie in Figur 2 gezeigt.

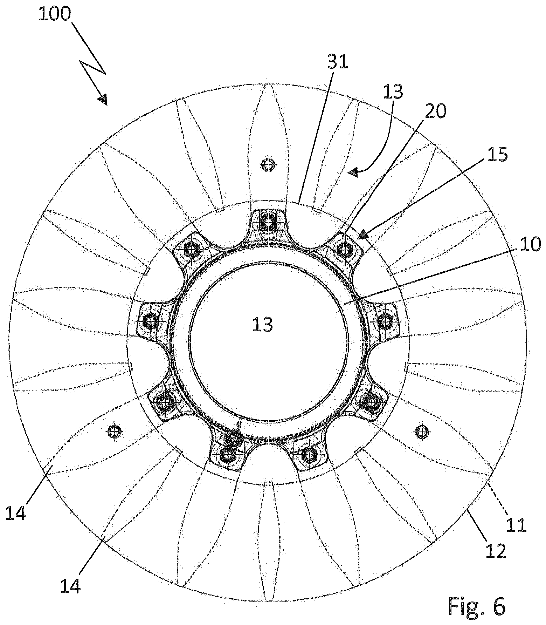

Figur 6 zeigt schließlich die Wellenbremsscheibe 100 in einer fertiggestellten Form. Zwischen den Reibringen 11 und 12 befindet sich das Einlageelement 13, das nunmehr aus den Armen 14 gebildet ist, die sich radial zwischen den Reibringen 11 und 12 erstrecken. Die Arme 14 der schmalen Form erstrecken sich von der zentralen Öffnung 31 der Reibringe 11 und 12 bis zum äußeren Rand, und die Arme 14 der breiten Form erstrecken sich von der Außenseite der Reibringe 11 und 12 in die Öffnung 31 hinein, um in Überdeckung mit den Vorsprüngen 20 der Nabe 10 zu gelangen. Schließlich können die Arme 14 der breiten Form mit den Vorsprüngen 20 durch die Schraubverbindungen 15 mit der Nabe 10 befestigt werden. Damit erfolgt die Anordnung des Reibringpaares mit den Reibringen 11 und 12 über die Arme 14 der breiten Form mit der Nabe 10. Gezeigt ist das Einlageelement 13 mit den bereits durch eine spanende Bearbeitung entnommenen Materialabschnitten 32, siehe hierzu Figur 5. Nach der Entnahme der Materialabschnitte 32 sind die Arme 14 voneinander gelöst, sodass der Grundabschnitt 24 des Einlageelementes 13 nunmehr auf die radial nach innen weisenden Enden der Arme 14 beschränkt ist.

Durch das Einlageelement 13, das lediglich auf die Arme 14 beschränkt ist, wird die Durchlüftung der Wellenbremsscheibe 100 weiter optimiert, da ein freier Luftstrom von der Innenseite zur Außenseite zwischen den Reibringen 11 und 12 entstehen kann. Gleichzeitig ist eine hohe Steifigkeit der Wellenbremsscheibe 100 bei einem vergleichsweise niedrigen Gewicht erreicht, da die Arme 14 eine hinreichend steife Einlage zwischen den Reibringen 11 und 12 bilden.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumliche Anordnungen, können sowohl für sich als auch in den verschiedensten Kombinationen erfindungswesentlich sein.

### BEZUGSZEICHENLISTE

- 100: Wellenbremsscheibe

- 10: Nabe
- 11: Reibring
- 12: Reibring
- 13: Einlageelement
- 13a: erstes Teilelement
- 13b: zweites Teilelement
- 14: Arm
- 15: Schraubverbindung
- 16: Loch (im Einlageelement)
- 17: Loch (im Vorsprung)
- 18: Schraubelement
- 19: Öffnung
- 20: Vorsprung
- 21: Kulissenstein
- 22: Schraubenmutter
- 23: Haltering
- 24: Grundabschnitt
- 25: Spannstift
- 26: Loch (im Reibring)
- 27: Loch (in Einlageelement)
- 28: Unterlegscheibe
- 29: Fuge
- 30: Armwurzel
- 31: Öffnung
- 32: Materialabschnitt

## Patentansprüche

1. Gebaute Wellenbremsscheibe (100) mit einer Nabe (10) und zwei Reibringen (11, 12), die parallel und beabstandet zueinander angeordnet sind, **dadurch gekennzeichnet dass** zwischen den Reibringen (11, 12) ein Einlageelement (13) mit sich sternförmig radial nach außen erstreckenden Armen (14) angeordnet ist, derart, dass die Reibringe (11, 12) an den Planseiten des Einlageelementes (13) anliegen.

2. Wellenbremsscheibe nach Anspruch 1, **dadurch gekennzeichnet, dass** die Reibringe (11, 12) mit dem Einlageelement (13) verlötet sind, bevorzugt durch ein Hartlöten und besonders bevorzugt durch ein Hochtemperaturlöten im Vakuum oder unter Schutzgasatmosphäre.

3. Wellenbremsscheibe nach Anspruch 1 oder 2, **dadurch gekennzeichnet, dass** das Einlageelement (13) mit der Nabe (10) wenigstens eine Verbindung (15), insbesondere mehrere Schraubverbindungen (15) aufweist, wobei das Einlageelement (13) eine innenseitige Öffnung (19) aufweist, in der die Nabe (10) angeordnet ist.

4. Wellenbremsscheibe nach Anspruch 3, **dadurch gekennzeichnet, dass** das Einlageelement (13) Löcher (16) aufweist und dass die Nabe (10) Vorsprünge (20) mit Löchern (17) aufweist, wobei die Schraubverbindungen (15) zumindest mit Schraubelementen (18) gebildet sind, die sich wenigstens durch die Löcher (16) im Einlageelement (13) und durch die Löcher (17) in den Vorsprüngen (20) hindurch erstrecken.

5. Wellenbremsscheibe nach Anspruch 4, **dadurch gekennzeichnet, dass** wenigstens eine, bevorzugt mehrere und besonders bevorzugt drei Schraubverbindungen (15) einen Kulissenstein (21) umfassen, um das Einlageelement (13) mit den Reibringen (11, 12) an der Nabe (10) zu positionieren.

6. Wellenbremsscheibe nach einem der Ansprüche 3 bis 5, **dadurch gekennzeichnet, dass** die Schraubverbindungen (15) Schraubenmuttern (22) umfassen, wobei insbesondere ein Haltering (23) vorgesehen ist, gegen den die Schraubenmuttern (22) insbesondere unter Verwendung von Unterlegscheiben (28) verspannt sind.

7. Wellenbremsscheibe nach einem der vorgenannten Ansprüche, **dadurch gekennzeichnet, dass** das Einlageelement (13) eine plane Erstreckung aufweist und einen Grundabschnitt (24) besitzt, in den die Öffnung (19) eingebracht ist, wobei die Arme (14) am Grundabschnitt (24) angeordnet sind und sich radial nach außen erstrecken, und wobei die Arme (14) insbesondere eine lateral zu ihrer radialen Erstreckungsrichtung gekrümmte Form aufweisen.

8. Wellenbremsscheibe nach einem der vorgenannten Ansprüche, **dadurch gekennzeichnet, dass** das Einlageelement (13) 3 bis 30, vorzugsweise 12 bis 24 und besonders bevorzugt 18 Arme (14) umfasst, wobei Arme (14) mit einer breiten Form und Arme (14) mit einer schmalen Formen vorhanden sind, die insbesondere wechselweise in breiter und schmaler Form am Grundabschnitt (24) des Einlageelementes (13) angeordnet sind.

9. Wellenbremsscheibe nach einem der vorgenannten Ansprüche, **dadurch gekennzeichnet, dass** ein Teil der mehreren Arme (14), insbesondere Arme (14) der schmalen Form, vom Grundabschnitt (24) getrennt sind.

10. Wellenbremsscheibe nach einem der vorgenannten Ansprüche, **dadurch gekennzeichnet, dass** das Einlageelement (13) aus zwei plan aneinander grenzende, insbesondere miteinander verlötete Teilelemente (13a, 13b) gebildet ist.

11. Verfahren zur Herstellung einer Wellenbremsscheibe mit einer Nabe (10) und zwei Reibringen (11, 12), die parallel und beabstandet zueinander angeordnet sind, wobei das Verfahren wenigstens die folgenden Schritte aufweist:
- Bereitstellen eines plan ausgebildeten Einlageelementes (13) mit sich sternförmig radial nach außen erstreckenden Armen (14),
- Fügen der Reibringe (11, 12) an den Planseiten des Einlageelementes (13), sodass das Einlageelement (13) zwischen den Reibringen (11, 12) angeordnet ist und
- Fügen des Einlageelementes (13) an der Nabe (10).

12. Verfahren nach Anspruch 11, wobei die Reibringe (11, 12) mit dem Einlageelement (13) verlötet werden, bevorzugt durch ein Hartlöten und besonders bevorzugt durch ein Hochtemperaturlöten im Vakuum oder unter Schutzgasatmosphäre.

13. Verfahren nach Anspruch 11 oder 12, wobei das Einlageelement (13) aus zwei Teilelementen (13a, 13b) bereitgestellt wird, die vorzugsweise miteinander verlötet werden, insbesondere gemeinsam mit dem Löten der Reibringe (11, 12) mit dem Einlageelement (13).

14. Verfahren nach einem der Ansprüche 11 bis 13, wobei für das Fügen der Reibringe (11, 12) am Einlageelement (13) Mittel zur Positionierung der Reibringe (11, 12) am Einlageelement (13) vorgesehen werden, die insbesondere Spannstifte (25) umfassen, die zur Positionierung in Löcher (26) in den Reibringen (11, 12) und in Löcher (27) im Einlageelement (13) eingesetzt werden.

15. Verfahren nach einem der Ansprüche 11 bis 14, wobei das Einlageelement (13) einen Grundabschnitt (24) aufweist, an dem die Arme (14) angeordnet sind und sich radial nach außen erstrecken, wobei ein Teil der mehreren Arme (14) vom Grundabschnitt (24) getrennt wird, insbesondere durch eine spanabnehmende Bearbeitung des Grundabschnittes (24).

16. Verfahren nach einem der Ansprüche 11 bis 15, wobei die Reibringe (11, 12) und/oder das Einlageelement (13), insbesondere die Teilelemente (13a, 13b), durch ein thermisches und/oder durch ein abrasives Trennverfahren, insbesondere durch ein Laserstrahlschneiden und/oder durch ein Wasserstrahlschneiden, aus Blechelementen hergestellt sind.

17. Verfahren nach einem der Ansprüche 11 bis 16, wobei die Reibringe (11, 12) und/oder das Einlageelement (13), insbesondere die Teilelemente (13a, 13b), wärmebehandelt werden, und wobei die Wärmebehandlung insbesondere mit dem Hartlöten und bevorzugt mit dem Hochtemperaturlöten im Vakuum oder unter Schutzgasatmosphäre kombiniert vorgenommen wird.

## Claims

1. An assembled axle-mounted brake disc (100) having a hub (10) and two friction rings (11, 12) which are arranged in parallel and spaced apart from one another, **characterized in that** between the friction rings (11, 12) an insert element (13) with arms (14) extending radially outwards is arranged such that the friction rings (11, 12) rest against the planar surface of the insert element (13).

2. Axle-mounted brake disc according to claim 1, **characterized in that** the friction rings (11, 12) are soldered to the insert element (13), preferably by brazing, and particularly preferably by a high-temperature soldering in a vacuum or under a protective gas atmosphere.

3. Axle-mounted brake disc according to claim 1 or 2, **characterized in that** the insert element (13) has at least one connection (15) to the hub (10), in particular a plurality of screw connections (15), wherein the insert element (13) has an inside opening (19) in which the hub (10) is arranged.

4. Axle-mounted brake disc according to claim 3, **characterized in that** the insert element (13) has holes (16) and that the hub (10) has protrusions (20) with holes (17), wherein the screw connections (15) are formed at least with screw elements (18) which extend at least through the holes (16) in the insert element (13) and through the holes (17) in the protrusions (20).

5. Axle-mounted brake disc according to claim 4, **characterized in that** at least one, preferably several and most preferably three screw connections (15) comprise a sliding block (21) in order to position the insert element (13) with the friction rings (11, 12) at the hub (10).

6. Axle-mounted brake disc according to one of claims 3 to 5, **characterized in that** the screw connections (15) comprise screw nuts (22), wherein in particular a retaining ring (23) is provided, against which the screw nuts (22) are tensioned, in particular using washers (28).

7. Axle-mounted brake disc according to one of the preceding claims, **characterized in that** the insert element (13) has a planar extension and a basic section (24) into which the opening (19) is inserted, wherein the arms (14) are arranged at the base section (24) and extend radially outward, and wherein the arms (14) have a curved shape, which is in particular lateral to their radial extension direction.

8. Axle-mounted brake disc according to one of the preceding claims, **characterized in that** the insert element (13) comprises 3 to 30, preferably 12 to 24 and particularly preferably 18 arms (14), wherein arms (14) having a broad form and arms (14) having a narrow form are provided which, in particular, are arranged alternately in their broad and narrow forms at the basic section (24) of the insert element (13).

9. Axle-mounted brake disc according to one of the preceding claims, **characterized in that** a part of the plurality of arms (14), in particular arms (14) having the narrow form, are separated from the basic section (24).

10. Axle-mounted brake disc according to one of the preceding claims, **characterized in that** the insert element (13) is formed of two partial elements (13a, 13b) adjoining each other in a planar manner, which are in particular soldered to each other.

11. A method for producing an axle-mounted brake disc having a hub (10) and two friction rings (11, 12), which are arranged in parallel and spaced apart from one another, wherein the method has at least the following steps:
- Provision of a planar insert element (13) with arms (14) extending radially outwards
- joining of the friction rings (11, 12) on the planar surfaces of the insert element (13), so that the insert element (13) is arranged between the friction rings (11, 12) and
- joining of the insert element (13) on the hub (10).

12. A method according to claim 11, wherein the friction rings (11, 12) are soldered to the insert element (13), preferably by means of brazing and particularly preferably by a high-temperature soldering in a vacuum or under a protective gas atmosphere.

13. A method according to either of claim 11 or 12, wherein the insert element (13) is provided from two partial elements (13a, 13b), which are preferably soldered to each other, in particular in conjunction with the soldering of the friction rings (11, 12) to the insert element (13).

14. A method according to any one of claims 11 to 13, wherein for the joining of the friction rings (11, 12) to the insert element (13), means for positioning the friction rings (11, 12) to the insert element (13) are provided, which in particular comprise clamping pins (25), which are used for positioning in holes (26) in the friction rings (11, 12) and in holes (27) in the insert element (13).

15. A method according to any one of claims 11 to 14, wherein the insert element (13) has a base section (24), at which the arms (14) are arranged and extend radially outwards, wherein a portion of the several arms (14) is separated from the base section (24), in particular by means of machine-cutting processing of the base section (24).

16. A method according to any one of claims 11 to 15, wherein the friction rings (11, 12) and/or the insert element (13), in particular the partial elements (13a, 13b), are made of plate elements by means of a thermal and/or an abrasive cutting method, in particular by means of a laser beam cutting and/or a water jet cutting.

17. A method according to any one of claims 11 to 16, wherein the friction rings (11, 12) and/or the insert element (13), in particular the partial elements (13a, 13b), are heat-treated, and wherein the heat treatment is conducted in combination in particular with the brazing and preferably with the high-temperature soldering in a vacuum or in a protective gas atmosphere.

## Revendications

1. Disque de frein d'essieu construit (100) avec un moyeu (10) et deux bagues de friction (11, 12), lesquelles sont disposées parallèlement l'une à l'autre et à distance l'une de l'autre, **caractérisé en ce qu'**un élément d'insertion (13) avec des bras (14) s'étendant en forme d'étoile radialement vers l'extrémité est disposé de telle façon entre les bagues de friction (11, 12) que les bagues de friction (11, 12) s'appliquent sur les faces planes de l'élément d'insertion (13).

2. Disque de frein d'essieu selon la revendication 1, **caractérisé en ce que** les bagues de friction (11, 12) sont brasées avec l'élément d'insertion (13), de préférence par brasage dur et de façon préférentielle par brasage à haute température sous vide ou sous atmosphère protectrice.

3. Disque de frein d'essieu selon la revendication 1 ou 2, **caractérisé en ce que** l'élément d'insertion (13) présente au moins une liaison (15) avec l'essieu (10), en particulier plusieurs liaisons à vis (15), l'élément d'insertion (13) présentant un orifice interne (19) dans lequel est disposé l'essieu (10).

4. Disque de frein d'essieu selon la revendication 3, **caractérisé en ce que** l'élément d'insertion (13) présente des trous (16) et **en ce que** l'essieu (10) présente des saillies (20) avec des trous (17), les liaisons à vis (15) étant formées au moins avec des éléments filetés (18) s'étendant au moins à travers les trous (16) dans l'élément d'insertion (13) et à travers les trous (17) dans les saillies (20).

5. Disque de frein d'essieu selon la revendication 4, **caractérisé en ce qu'**au moins une, de préférence plusieurs et de façon particulièrement préférée trois liaisons à vis (15) comportent un coulisseau (21) destiné à positionner l'élément d'insertion (13) avec les bagues de friction (11, 12) sur l'essieu (10).

6. Disque de frein d'essieu selon l'une des revendications 3 à 5, **caractérisé en ce que** les liaisons à vis (15) comportent des écrous (22), dans lequel il est en particulier prévu une bague de retenue (23) contre laquelle les écrous (22) sont serrés, en particulier à l'aide de rondelles (28).

7. Disque de frein d'essieu selon l'une des revendications précédentes, **caractérisé en ce que** l'élément d'insertion (13) présente une extension plane et une section de base (24) dans laquelle est réalisé l'orifice (19), dans lequel les bras (14) sont disposés sur la section de base (24) et s'étendent radialement vers l'extérieur, et dans lequel les bras (14) présentent en particulier une forme courbée latéralement par rapport à sa direction d'extension radiale.

8. Disque de frein d'essieu selon l'une des revendications précédentes, **caractérisé en ce que** l'élément d'insertion (13) comporte entre 3 et 30 bras (14), de préférence entre 12 et 24 et de façon particulièrement préférée 18, dans lequel il est prévu des bras (14) avec une forme large et des bras (14) avec une forme étroite, lesquels sont en particulier disposés par alternance de forme large et de forme étroite sur la section de base (24) de l'élément d'insertion (13).

9. Disque de frein d'essieu selon l'une des revendications précédentes, **caractérisé en ce qu'**une partie des plusieurs bras (14), en particulier des bras (14) de forme étroite, est séparée de la section de base (24).

10. Disque de frein d'essieu selon l'une des revendications précédentes, **caractérisé en ce que** l'élément d'insertion (13) est constitué de deux éléments partiels (13a, 13b) adjacents de façon plane, en particulier brasés ensemble.

11. Procédé pour la fabrication d'un disque de frein d'essieu avec un essieu (10) et deux bagues de friction (11, 12) disposées parallèlement l'une à l'autre et à distance l'une de l'autre, le procédé comprenant au moins les étapes suivantes :
- mise à disposition d'un élément d'insertion (13) plan avec des bras (14) s'étendant en forme d'étoile radialement vers l'extérieur,
- montage des bagues de friction (11, 12) sur les faces planes de l'élément d'insertion (13), de manière à disposer l'élément d'insertion (13) entre les bagues de friction (11, 12), et
- montage de l'élément d'insertion (13) sur l'essieu (10).

12. Procédé selon la revendication 11, dans lequel les bagues de friction (11, 12) sont brasées avec l'élément d'insertion (13), de préférence par brasage dur et de façon préférentielle par brasage à haute température sous vide ou sous atmosphère protectrice.

13. Procédé selon la revendication 11 ou 12, dans lequel l'élément d'insertion (13) est constitué de deux éléments partiels (13a, 13b), lesquels sont de préférence brasés ensemble, en particulier simultanément avec le brasage des bagues de friction (11, 12) avec l'élément d'insertion (13).

14. Procédé selon l'une des revendications 11 à 13, dans lequel, pour le montage des bagues de friction (11, 12) sur l'élément d'insertion (13), il est prévu des moyens permettant de positionner les bagues de friction (11, 12) sur l'élément d'insertion (13), lesquels comprennent en particulier des goupilles de serrage (25) introduites dans des trous (26) dans les bagues de friction (11, 12) et dans des trous (27) dans l'élément d'insertion (13) pour le positionnement.

15. Procédé selon l'une des revendications 11 à 14, dans lequel l'élément d'insertion (13) présente une section de base (24) sur laquelle sont agencés les bras (14) tout en s'étendant radialement vers l'extérieur, une partie des plusieurs bras (14) étant séparée de la section de base (24), en particulier au moyen d'un usinage par enlèvement de copeaux sur la section de base (24).

16. Procédé selon l'une des revendications 11 à 15, dans lequel les bagues de friction (11, 12) et/ou l'élément d'insertion (13), en particulier les éléments partiels (13a, 13b), sont fabriqués à partir d'éléments en tôle, au moyen d'un procédé de séparation thermique et/ou abrasif, en particulier au moyen d'un découpage au laser et/ou d'un découpage au jet d'eau.

17. Procédé selon l'une des revendications 11 à 16, dans lequel les bagues de friction (11, 12) et/ou l'élément d'insertion (13), en particulier les éléments partiels (13a, 13b) sont traités à chaud, et dans lequel le traitement à chaud est réalisé en particulier en combinaison avec le brasage dur et de préférence avec le brasage à haute température sous vide ou sous atmosphère protectrice.
